Europäisches Patentamt

European Patent Office

Office européen des brevets

(11) Veröffentlichungsnummer: **0 286 938 B1**

(12) **EUROPÄISCHE PATENTSCHRIFT**

(45) Veröffentlichungstag der Patentschrift: **09.12.92**

(21) Anmeldenummer: **88105370.6**

(22) Anmeldetag: **02.04.88**

(51) Int. Cl.⁵: **G11B 7/24**, G11B 7/26

(54) **Irreversible optische Aufzeichnungsmedien und Verfahren zu ihrer Herstellung.**

(30) Priorität: **15.04.87 DE 3712857**

(43) Veröffentlichungstag der Anmeldung:
**19.10.88 Patentblatt 88/42**

(45) Bekanntmachung des Hinweises auf die
Patenterteilung:
**09.12.92 Patentblatt 92/50**

(84) Benannte Vertragsstaaten:
**BE DE FR GB NL**

(56) Entgegenhaltungen:
**EP-A- 0 083 396**
**EP-A- 0 110 730**

**PATENT ABSTRACTS OF JAPAN, Band 6, Nr.
51 (P-108)(929), 2. Mai 1980**

**PATENT ABSTRACTS OF JAPAN, Band 7, Nr.
215 (M-244)(1360), 22. September 1983**

(73) Patentinhaber: **BASF Aktiengesellschaft
Carl-Bosch-Strasse 38
W-6700 Ludwigshafen(DE)**

(72) Erfinder: **Werner, Arend, Dr.
Kurbrunnenstrasse 26
W-6702 Bad Duerkheim(DE)**
Erfinder: **Hibst, Hartmut, Dr.
Sternstrasse 215
W-6700 Ludwigshafen(DE)**
Erfinder: **Barzynski, Helmut
An der Ameisenhalde 49
W-6702 Bad Duerkheim(DE)**

## Beschreibung

Die Erfindung betrifft irreversible optische Aufzeichnungsmedien zur Aufzeichnung von Informationen mittels lokaler Änderung der optischen Eigenschaften einer Aufzeichnungsschicht unter Einwirkung einer Lichtstrahlung sowie ein Verfahren zur Herstellung dieses Aufzeichnungsmediums.

Es ist bekannt, daß sich die optischen Eigenschaften, wie z.B. die Reflexion, von Oberflächen stark unterscheiden, je nachdem, ob die Oberfläche plan ist, oder ob sie eine Mikrostrukturierung, eine sogenannte Textur aufweist, deren Abmessungen in der Größenordnung der Wellenlänge des Lichtes liegen. So ist die Reflektivität derartig mikrostrukturierter Oberflächen deutlich niedriger als im Falle ebener Oberflächen (P. Clapham und M. Hutley; Nature Vol. 244, S. 281 f. (1973)). Bei Verwendung von Metall- bzw. Halbleiteroberflächen, die einen hohen Absorptionskoeffizienten aufweisen, bewirkt die Reduktion der normalerweise hohen Reflektivität dieser Materialien durch Schaffung einer texturierten Oberfläche eine hohe Absorption der eingestrahlten Lichtenergie in einer dünnen Oberflächenzone. Die dadurch bedingte hohe Temperatur in dieser Zone, z.B. bei Bestrahlung mit einem intensiven Laserstrahl, kann zu einer Änderung der Oberflächenstruktur genutzt werden, die ihrerseits eine Änderung der optischen Eigenschaften bewirkt. Dieser Effekt kann zur irreversiblen optischen Speicherung ausgenutzt werden, wobei durch Einwirkung eines intensiven Laserstrahles lokal eine irreversible Änderung, z.B. der Reflektivität einer Metall- bzw. Halbleiterschicht hervorgerufen wird.

In Appl. Phys. Lett. 40, S. 622 (1982) wird ein optisch irreversibles Speichermedium beschrieben, das aus einer Ge-Schicht besteht, die mittels Ionenätztechniken texturiert wurde (Ge-Säulen mit ca. 200 nm Durchmesser). Durch Laserbestrahlung wird diese Textur eingeebnet. Nachteilig ist das sehr aufwendige und kostspielige Herstellungsverfahren derartiger ionengeätzter Oberflächen. Nach den Angaben in der EP-A 0 107 379 besteht die Aufzeichnungsschicht aus einem Metallfilm, der auf die texturierte Oberfläche eines Kunststoffsubstrates aufgebracht wird. Das texturierte Substrat wird mittels Spritzgußtechnik von einem Stamper abgenommen. Als Vorlage für den Masteringprozeß dient ein Laserinterferogramm, mit dem eine Photolackschicht belichtet wird, die nach anschließendem Entwickeln und chemischem Ätzen die gewünschte texturierte Oberfläche ergibt. Die mittels Laserinterferenz erzeugte Vorlage kann z.B. ein Muster aus Rillen in den unterschiedlichsten Anordnungen bzw. als Sonderform Ausstülpungen, die durch Kreuzung von Rillen hervorgerufen werden, aufweisen. Verfahrensbedingt ist dabei die streng periodische Anordnung der Rillen bzw. Ausstülpungen, die durch den angegebenen Herstellungsprozeß bedingt ist. Nachteilig ist deshalb zum einen, daß das Interferogramm nur eine begrenzte Variationsmöglichkeit zur Texturbildung gestatten und weiterhin einen komplizierten Herstellungsprozeß erfordert. Zum anderen führt diese periodische Anordnung in nachteiliger Weise zu ausgeprägten Unterschieden in der Reflektion in Abhängigkeit von der Polarisation des verwendeten Lichtes. Ferner ist die Reflektion in unerwünschter Weise stark vom Einfallswinkel des Lichtes abhängig. Die in dieser Druckschrift angegebenen Dimensionen der Rillen bzw. Ausstülpungen liegen bei Abständen von ca. 200 nm und Tiefen von mindestens 100 nm bis 400 nm. Diese Dimensionen sind mit dem Verfahren der Laserinterferenz herstellbar. Für zukünftige Aufzeichnungsmedien wird der Trend aber zu Markendurchmessern gehen, die deutlich unter dem derzeitigen (1 μm) liegen, indem die Wellenlänge der zur Zeit gebräuchlichen Laser von 800 nm ins Ultraviolette also nach 300 nm verschoben wird. Für diesen Fall ist aber eine deutliche Verkleinerung der Dimensionen der Textur erforderlich, da die Dimension der Textur deutlich kleiner sein muß als die Wellenlänge der verwendeten Strahlung. Diese Verkleinerung der Textur ist mittels Laserinterferenz nur dann durchführbar, wenn die hierfür verwendeten Laser noch deutlich weiter im Ultravioletten liegen, ein Umstand, der sehr fraglich erscheint. Der in EP-A 0 107 379 angeführte Ausweg, die Photolackschicht mittels Elektronenstrahl zu belichten, kann zwar die benötigten feinen Strukturen erzeugen, hat aber den Nachteil, daß das Strukturieren der optischen Platte durch Abrastern mit dem Elektronenstrahl sehr lange Zeiten benötigt und einen sehr hohen technischen Aufwand darstellt.

Den angegebenen Nachteil periodisch aufeinanderfolgender Erhebungen und Vertiefungen weisen auch die Aufzeichnungsmedien gemäß der EP-A 110 730 auf. Im Gegensatz hierzu wird in der EP-A 83 396 ein Aufzeichnungsmedium mit einem diskontinuierlichen, durch Vakuumbedampfung eines Trägers erhaltenen Film aus einzelnen Inseln eines reflektierenden Metalls beschrieben. Diese durch geringe Abstände voneinander getrennten Inseln koaleszieren unter Lichteinwirkung zu größeren Spots, welche dann ein Datenbit repräsentieren. Derartig aufgebaute Medien sind jedoch Einzelstücke und eignen sich nicht zur reproduzierbaren Vervielfältigung.

In der DE-OS 36 21 685 wird ein irreversibles optisches Aufzeichnungsmedium beschrieben, das eine texturierte Aufzeichnungsschicht aus einer Schicht von einer oder mehreren Lagen von Polymerkügelchen und einer auf dieser texturierten Kunststoffschicht, als Absorber wirkenden, aufgebrachten Metall- bzw.

Halbleiterschicht aufweist. Mit Polymerkugeldurchmessern von etwa 50 nm lassen sich sehr feine Texturen herstellen, wobei als weiterer Vorteil dieses Medium die Erzeugung einer nicht periodischen Textur durch willkürliche Anordnung der Polymerkügelchen hervorzuheben ist. Es konnte gezeigt werden, daß diese Aufzeichnungsschicht hervorragende optische Eigenschaften, wie geringe Reflektivität im unbeschriebenen Fall und hohe Reflektivität nach Beschreiben mit einem Laser aufweist. Von Nachteil ist allerdings die Notwendigkeit für jedes einzelne Speichermedium eine Polymerkügelchenschicht aufzubringen. Damit ist dieses Verfahren unwirtschaftlich.

Aufgabe der vorliegenden Erfindung war es daher, ein irreversibles optisches Aufzeichnungsmedium und ein wirtschaftliches Verfahren zu seiner Herstellung bereitzustellen, das auf der einen Seite die Vorteile der kostengünstigen Vervielfältigung der texturierten Oberfläche im Spritzguß ausnutzt und das andererseits die nachteiligen Eigenschaften der auf laserinterferometrischem Wege hergestellten Vorlage umgeht.

Es wurde nun gefunden, daß ein irreversibles optisches Aufzeichnungsmedium, im wesentlichen bestehend aus einem Substrat aus einem Polymer mit texturierter Oberfläche und einer darauf aufgebrachten Metall- oder Halbleiterschicht mit einer optischen Absorption von 5 bis 95 % und einer Dicke von 10 bis 50 nm, die gestellte Aufgabe löst, wenn die Textur der Oberfläche entweder nur aus Erhebungen oder nur aus Vertiefungen besteht, die weitgehend halbkugelförmig sind, einen Durchmesser von 50 bis 200 nm aufweisen und die unter Einwirkung einer Lichtstrahlung veränderbar sind. Durch diese Veränderung der vorhandenen Struktur aufgrund der Lichteinstrahlung ändern sich auch die optischen Eigenschaften des Aufzeichnungsmediums.

Das Aufzeichnungsmedium besteht aus einem für die benutzte Lichtstrahlung, im allgemeinen eine Laserstrahlung mit einer Wellenlänge zwischen 0,3 und 1,0 $\mu$m, transparenten Substrat aus einem Kunststoff, wie z.B. Polycarbonat, PMMA oder Polystyrol mit texturierter Oberfläche und einer darauf aufgebrachten Metall- oder Halbleiterschicht, z.B. aus Gold, Platin, Silber, Germanium, Silicium sowie Legierungen dieser Materialien, wobei die Textur aus Strukturen der angegebenen Dimensionen besteht.

Gegenstand der Erfindung ist auch ein Verfahren zur Herstellung der derart gekennzeichneten optischen Aufzeichnungsträger durch Herstellen des texturierten Substrats mittels Pressen oder Spritzgußtechnik unter Verwendung eines Stampers und anschließendes Beschichten der texturierten Oberfläche des Substrats mit einer Metall- oder Halbleiterschicht mit einer optischen Absorption von 5 bis 95 % in einer Dicke von 10 bis 50 nm, wobei zur Herstellung dieses Stampers eine Dispersion von Polymerkügelchen mit Durchmessern zwischen 50 und 200 nm in einem Lösungsmittel auf ein ebenes Hilfsubstrat aufgebracht, dieses mit einer elektrisch leitenden Schicht bedampft und anschließend diese Schicht soweit verdickt wird, daß die Vorlage und die als Stamper dienende Metallreplik voneinander getrennt werden können.

Im einzelnen wird das erfindungsgemäße Verfahren derart durchgeführt, daß zuerst eine Dispersion von Polymerkügelchen durch vorzugsweise Schleuderbeschichtung in einer möglichst dünnen Schicht, vorzugsweise einer Monolage dieser Polymerkügelchen, auf ein ebenes Hilfsubstrat, im allgemeinen Glas, aufgebracht wird. Sowohl die Herstellung dieser Polymerkügelchen in der gewünschten Teilchengröße, deren Dispersion sowie das Aufbringen auf ein Trägermaterial sind bekannt und u.a. in der DE-OS 36 21 685 beschrieben.

Auf diese Schicht wird nun durch Hochvakuumbedampfung oder durch Kathodenzerstäubung eine 0,1 bis 1,0 $\mu$m dicke Metallschicht, im allgemeinen aus Silber, Nickel oder Platin, vorzugsweise aus Silber aufgebracht. Diese auf den Polymerkügelchen befindliche Metallschicht wird dann in bekannter Weise verstärkt, beispielsweise auf chemischem, galvanischem oder chemisch-galvanischem Weg. Hierzu wird üblicherweise Nickel eingesetzt. Danach sollte die gesamte Metallschicht zweckmäßigerweise eine Dicke von 0,1 bis 0,5 mm aufweisen. Der so erhaltene Negativabdruck wird dann durch Auswaschen mit einem Lösungsmittel für die Polymerkügelche, z.B. mit Toluol, und ggf. nach oberflächlicher Passivierung mit einem Oxidationsmittel zur Herstellung weiterer Metallkopien (Stamper) verwendet. Die so hergestellten Metallplatten dienen dann als Prägeform für die Herstellung der Substrate mit texturierter Oberfläche. Ihre Herstellung geschieht in bekannter Weise durch Spritzgießen, Spritzprägen, Pressen oder Gießen. Als Polymere kommen hierfür Polycarbonate, Polyester, Polyvinylchlorid, Polymethstyrol, Polymethacrylester und Polymethylmethacrylester in Frage. Auf diese Weise lassen sich sowohl Positiv- als auch Negativabdrücke der verwendeten Vorlage reproduzieren.

Das danach vorhandene Substrat mit der texturierten Oberfläche wird schließlich durch Aufbringen der speziellen Metall- oder Halbleiterschicht mit einer optischen Absorption von 5 bis 95 % in Dicke von 10 bis 50 nm zum erfindungsgemäßen optischen Aufzeichnungsmedium. Diese Metall- bzw. Halbleiterschicht wird in bekannter Weise durch einen Hochvakuumbeschichtungsprozeß wie z.B. durch Sputtern oder durch Aufdampfen hergestellt.

Diese erfindungsgemäßen optischen, irreversiblen Aufzeichnungsmedien haben gegenüber solchen nach dem Stand der Technik den Vorteil, daß sie feinere Strukturen und eine Textur ohne periodische Anordnung aufweisen. Zudem ist von besonderem Vorteil, daß sie sich in einfacher und kostengünstiger Weise herstellen lassen.

Ferner erlaubt das erfindungsgemäße irreversible optische Aufzeichnungsmedium die Verwendung von Kunststoffen, die zwar nicht in Form von aufschleuderbaren feinen Kügelchen herstellbar sind, die aber aufgrund ihrer chemischen und physikalischen Eigenschaften Vorteile gegenüber den in Form von Kügelchen verfügbaren Polymeren bei der Erzeugung von Marken durch Laserbestrahlung bieten.

Zur Erzeugung von bei solchen Aufzeichnungsmedien bekannten Spurrillen bzw. von jeglicher anderer vorgeprägter Information in der Aufzeichnungsschicht kann die aus Polymerkügelchen bestehenden Vorlage vor dem Metallabscheidungsprozeß auf einem geeigneten Laserschreibplatz mit einer Spurrille versehen bzw. mit Information in bestimmten Segmenten beschrieben werden.

Die Anwendung der erfindungsgemäß hergestellten texturierten Oberfläche ist nicht auf optisch irreversible Aufzeichnungsschichten der oben beschriebenen Art begrenzt. Man kann das spritzgegossene texturierte Substrat auch zur Verbesserung anderer, bereits bekannter irreversibler bzw. reversibler optischer Speichermedien einsetzen. Da diese texturierten Oberflächen aufgrund der regellosen Anordnung der halbkugelförmigen Erhebungen bzw. Vertiefungen keine Polarisationseffekte zeigen, lassen sie sich auch zur Erhöhung der Lichtabsorption und damit zur Steigerung der Schreibempfindlichkeit im Falle magnetooptischer Speicherschichten einsetzen. Derartig texturierte Oberflächen können ferner als Substrat für Magnetspeicherschichten Anwendung finden, um die Flugfähigkeit der Magnetköpfe zu gewährleisten.

Beispiel

Eine PMMA-Platte mit einem Durchmesser von 18 cm wurde durch Spincoaten mit einer Polystyrolemulsion mit einer Schicht aus Polystyrolkugeln (Kugeldurchmesser 50 nm) versehen. In einer Hochvakuumbedampfungsanlage wurde diese texturierte Schicht mit einer 100 nm dicken Ag-Schicht beschichtet. In einem Galvanikbad mit wäßrigem Nickelsulfamat als Elektrolyt wurde bei 55°C anodisch auf die Silberschicht Nickel in einer Schichtdicke von 0,28 mm abgeschieden. Dabei wurde zur Vermeidung von Verformungen mit langsam ansteigender Stromstärke (0,1 Amp. bis 10 Amp.) gearbeitet. Danach wurde die Nickelplatte (Stamper) von Der PMMA-Platte abgetrennt, 1 Stunde mit siedendem Toluol behandelt und das Silber mit einer ammoniakalischen Wasserstoffperoxidlösung entfernt. Raster-ELMIs der Stamperoberfläche zeigen deutlich halbkugelförmige Vertiefungen mit Durchmessern von 50 nm als Abbild der Polymerkügelchen. Der Stamper wurde auf einem Durchmesser von 13 cm randbeschnitten und in eine Kunststoffpresse eingelegt. Es wurde ein handelsübliches Epoxidharz eingegossen und thermisch ausgehärtet. Die Nickelplatte konnte von der Handplatte abgezogen werden. Der so hergestellte Abdruck wurde dann mit einer 20 nm dicken Au-Schicht bedampft. Reflexionsmessungen durch das Substrat ergeben eine Reduktion auf 70 % für eine Wellenlänge von 800 nm verglichen mit einer entsprechenden Au-Schicht auf einem ebenen Epoxid-Substrat.

**Patentansprüche**

1.  Irreversibles optisches Aufzeichnungsmedium, im wesentlichen aus einem Substrat aus einem Polymer mit texturierter Oberfläche und einer darauf aufgebrachten Metall- oder Halbleiterschicht mit einer optischen Absorption von 5 bis 95 % und einer Dicke von 10 bis 50 nm, dadurch gekennzeichnet, daß die Textur der Oberfläche entweder nur aus Erhebungen oder nur aus Vertiefungen besteht, die weitgehend halbkugelförmig sind, einen Durchmesser von 50 bis 200 nm aufweisen und die unter Einwirkung einer Lichtstrahlung veränderbar sind.

2.  Verfahren zur Herstellung irreversibler optischer Aufzeichnungsmedien durch Herstellen eines Substrats mit einer texturierten Oberfläche aus einem Polymeren aus der Gruppe der Polycarbonate, Polyester, Polyvinylchlorid, Polymethylstyrol, Polymethacrylester und Polymethylmethacrylester durch Pressen oder mittels Spritzgußtechnik unter Verwendung eines Stampers und Beschichten der texturierten Oberfläche des Substrats mit einer Metall- oder Halbleiterschicht mit einer optischen Absorption von 5 bis 95 % in einer Dicke von 10 bis 50 nm, dadurch gekennzeichnet, daß der Stamper durch Aufbringen einer Dispersion von Polymerkügelchen mit Durchmessern zwischen 50 und 200 nm in einem Lösungsmittel auf ein ebenes Hilfssubstrat, Entfernen des Lösungsmittels, Bedampfen der Schicht der Polymerkügelchen mit einer elektrisch leitenden Schicht, Verstärken dieser Schicht durch chemische und/oder elektrische Abscheidung und durch anschließendes Trennen von Vorlage und der als Stamper dienenden Metallreplik hergestellt wird.

## Claims

1. An irreversible optical recording medium consisting essentially of a substrate comprising a polymer having a textured surface and a metal or semiconductor layer applied thereto having an optical absorption from 5 to 95% and a thickness from 10 to 50 nm, wherein the texture of the surface comprises either only elevations or only depressions which are substantially hemispherical and have a diameter of from 50 to 200 nm and are capable of undergoing alteration on exposure to light.

2. A process for fabricating an irreversible optical recording medium by producing a substrate having a textured surface from a polymer of the group consisting of the polycarbonates, polyesters, polyvinyl chloride, polymethylstyrene, polymethacrylates and polymethyl methacrylates by pressing or by injection molding using a stamper and coating the textured surface of the substrate in a thickness from 10 to 50 nm with a metal or semiconductor layer having an optical absorption from 5 to 95%, which comprises producing the stamper by applying a dispersion of polymer beads from 50 to 200 nm in diameter in a solvent to a planar auxiliary substrate, removing the solvent, coating the layer of polymer beads with an electroconductive layer by vapor deposition, thickening this layer by chemical and/or electrical deposition and by subsequently separating the original and the metal replicate serving as stamper.

## Revendications

1. Milieu d'enregistrement optique irréversible, constitue essentiellement d'un substrat en polymère à surface texturée et d'une couche métallique ou semiconductrice appliquée dessus, d'une absorption optique de 5 à 95 % et d'une épaisseur de 10 à 50 nm, caractérisé par le fait que la texture de la surface est constituée soit uniquement d'élévations soit uniquement de creux qui sont de forme sensiblement hémisphérique présentant un diamètre de 50 à 200 nm et sont modifiables sous l'action d'un rayonnement lumineux.

2. Procédé de fabrication d'un milieu d'enregistrement optique irréversible par préparation d'un substrat à surface texturée en un polymère du groupe des polycarbonate, polyester, polychlorure de vinyle, polyméthylstyrène, polyméthacrylester et polyméthylméthacrylester, par moulage par compression ou au moyen d'une technique de moulage par injection, en utilisant un estampeur et recouvrement de la surface texturée du substrat par une couche métallique ou semi-conductrice, d'une absorption optique de 5 à 95 % et d'une épaisseur de 10 à 50 nm caractérisé par le fait que l'estampeur est fabriqué par application d'une dispersion de billes de polymère d'un diamètre compris entre 50 et 200 nm dans un solvant, sur un substrat auxiliaire plan, élimination du substrat, vaporisation de la couche de polymère avec une couche électriquement conductrice, renforcement de cette couche par dépôt chimique et/ou électrique et par, ensuite, séparation du modèle et de la réplique métallique servant d'estampeur.